# EUROPEAN PATENT SPECIFICATION

(11) **EP 1 195 549 B1**
(45) Date of publication and mention of the grant of the patent: **19.04.2006**
(21) Application number: 01308453.8
(22) Date of filing: 03.10.2001
(51) Int. Cl.: F16L 11/127

(54) **Fluid transfer hose**
Schlauch zum Überführen eines Fluids
Tuyau flexible de transfert de fluide

(30) Priority: 06.10.2000 JP 2000307371
(43) Date of publication of application: 10.04.2002
(73) Proprietor: THE YOKOHAMA RUBBER CO., LTD., Tokyo (JP)
(72) Inventor: Wakabayashi, Masashi, The Yokohama Rubber Co., Ltd, Hiratsuka-shi, Kanagawa-ken (JP); Shimanoe, Satoshi, The Yokohama Rubber Co., Ltd., Hiratsuka-shi, Kanagawa-ken (JP); Ooka, Naoyuki, The Yokohama Rubber Co., Ltd., Hiratsuka-shi, Kanagawa-ken (JP); Honda, Yukinori, The Yokohama Rubber Co., Ltd., Hiratsuka-shi, Kanagawa-ken (JP)
(74) Representative: Sturt, Clifford Mark

(56) References cited:
- EP-A- 0 952 378
- US-A- 4 259 553
- US-A- 4 446 892

## Description

### BACKGROUND OF THE INVENTION

### Technical Field of the Invention

The present invention relates to a fluid transfer hose for transferring oil, etc. on the sea and more particularly, to a fluid transfer hose which allows the operator to find easily a destruction inside the hose.

### Related Art

Hoses for transfer of fluid used for transferring fluid such as oil on the sea may cause a serious environmental pollution, if the hoses break and the transferred fluid spills into the sea. Therefore, it is essential for the hoses to have a structure which can detect the hose destruction as soon as possible.

In general, the fluid transfer hoses have an inner surface rubber layer, a group of main reinforcement layers, a spilled fluid absorption layer, a group of auxiliary reinforcement layers, and an outer surface rubber layer disposed in that order from the hose inner circumferential side. The group of main reinforcement layers and group of auxiliary reinforcement layers each have a plurality of reinforcement layers laminated to each other and made from reinforcement cords coated with rubber that are slant to the hose longitudinal direction so that reinforcement cords of adjacent reinforcement layers intersect to each other. The group of main reinforcement layers serves as a pressure-resistant layer against the fluid passing inside the inner surface rubber layer, while the group of auxiliary reinforcement layers prevents the fluid spilled into the spilled fluid absorption layer by the damage of the group of main reinforcement layers from leaking outside.

In the fluid transfer hoses described above, there has heretofore been proposed hoses in which the group of auxiliary reinforcement layers deforms by elongating in the hose longitudinal or radial direction, or deforms by distorting in the hose circumferential direction under the pressure of the spilled fluid, when a fluid spills into the spilled fluid absorption layer due to the damage of the group of main reinforcement layers. Such hoses have a plurality of colored lines provided on the surface of the outer surface rubber layer. These lines make a different figure from original by the elongation or distortion on the group of auxiliary reinforcement layers. The operator can find the damage of the group of main reinforcement layers, before the transferred fluid spills into the sea, by detecting the figure of these lines through visual inspection.

However, as the fluid transfer hoses are connected to each other and extends over several hundred meters, the operator may not find the different line figure through visual inspection from a distance, even when the group of auxiliary reinforcement layers is arranged to deform as described above. Especially, at night, it is extremely difficult to find it.

European patent application 0952378A2, published on 27th October 1999, discloses a fluid transfer hose having a hose body, which comprises an inner surface rubber layer, a group of main reinforcements, a spilled fluid absorption layer and an outer surface rubber layer. The hose body is provided with a transponder, which can respond to the presence of fluid spilled into the fluid absorption layer due to the damage of the group of main reinforcement layers, and an alarm means, namely a scanner, connected to the transponder for emitting an alarm when the transponder responds to the damage or fluid pressure.

US 4,446,892 describes a fluid transfer hose composed of a hose body, which comprises an inner surface rubber layer, a main reinforcement layer, an auxiliary reinforcement layer and an outer surface layer. The hose body is provided with an electric conductor, which can be cui off when the inner tube is damaged, and an alarm means is provided, which is connected to the electric conductor for emitting an alarm when the electric conductor is cut off.

### SUMMARY OF THE INVENTION

An object of the present invention is to provided a fluid transfer hose allowing the operator to find the damage of the group of main reinforcement layers easily and securely even from a remote site or at night.

In order to achieve the aforementioned object, a fluid transfer hose according to the present invention has a hose body which comprises an inner surface rubber layer, a group of main reinforcement layers, a spilled fluid absorption layer, a group of auxiliary reinforcement layers, and an outer surface rubber layer disposed in that order from the hose inner circumferential side, the group of main reinforcement layers having a plurality of reinforcement layers laminated to each other and made from rubber coating reinforcement cords that are slant to the hose longitudinal direction so that the reinforcement cords of adjacent reinforcement layers intersect each other, the group of auxiliary reinforcement layers having a plurality of reinforcement layers laminated to each other and made from rubber coating reinforcement cords, wherein the hose body is provided with at least one electric conductor which can be cut off or changes its resistance value by the damage of said group of main reinforcement layers or by the pressure of the fluid spilled into the spilled fluid absorption layer due to the damage of the group of main reinforcement layers, and alarm means, connected to the electric conductor, for emitting an alarm when the electric conductor is cut off or the resistance value varies.

According to the above configuration, the operator would not fail to find the damage of the group of main reinforcement layers even from a remote site, because the alarm means issues a warning when the conductor is cut off or the resistance value varies by the damage of the group of main reinforcement layers or by the pressure of the fluid spilled into the spilled fluid reinforcement layer due to the damage of the group of main reinforcement layers. Also, even at night, the operator can easily and securely find the damage of the group of main reinforcement layers.

### BRIEF DESCRIPTION OF DRAWINGS

Fig. 1 is a perspective view showing an embodiment of a fluid transfer hose of the present invention;
Fig. 2 is an enlarged cross section of the fluid transfer hose in Fig. 1;
Fig. 3 is an illustrative view, including a circuit diagram, of the fluid transfer hose in Fig. 1;
Fig. 4 is an illustrative view, including a circuit diagram, of another embodiment of the fluid transfer hose of the present invention;
Fig. 5 is an illustrative view, including a circuit diagram, of still another embodiment of the fluid transfer hose of the present invention;
Fig. 6 is a cross section showing still another embodiment of the fluid transfer hose of the present invention;
Fig. 7 is an illustrative view, including a circuit diagram, of still another embodiment of the fluid transfer hose of the present invention;
Fig. 8 is an illustrative view, including a circuit diagram, of still another embodiment of the fluid transfer hose of the present invention;
Fig. 9 is an illustrative view, including a circuit diagram, of still another embodiment of the fluid transfer hose of the present invention;
Fig. 10 is an illustrative view, including a circuit diagram, of still another embodiment of the fluid transfer hose of the present invention;
Fig. 11 is an illustrative view, including a circuit diagram, of still another embodiment of the fluid transfer hose of the present invention;
Fig. 12 is an illustrative view, including a circuit diagram, of still another embodiment of the fluid transfer hose of the present invention;
Fig. 13 is an illustrative view, including a circuit diagram, of still another embodiment of the fluid transfer hose of the present invention;
Fig. 14 is an illustrative view, including a circuit diagram, of still another embodiment of the fluid transfer hose of the present invention;
Fig. 15 is an illustrative view showing another embodiment of the electric conductor used for the fluid transfer hose of the present invention; and
Fig. 16 is a cross section showing a mounting structure of a housing section for housing a light, battery, etc. used for the fluid transfer hose of the present invention;

### DESCRIPTION OF THE PREFERRED EMBODIMENTS

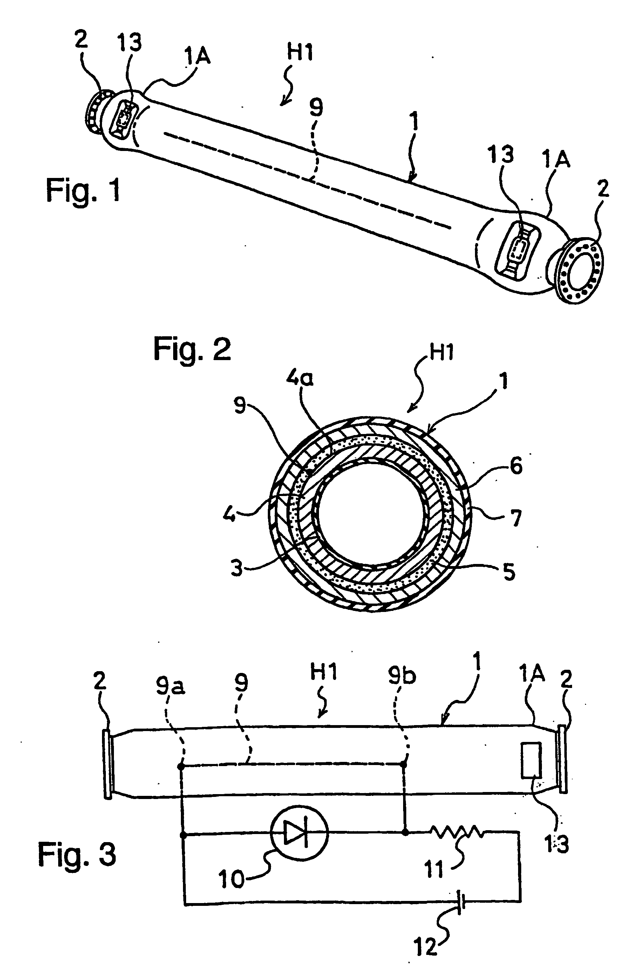

Referring to Fig. 1 to Fig. 3, a fluid transfer hose H1 according to the present invention includes a hose body 1 and attachment flanges 2 attached to both ends thereof.

The hose body 1 has a group of main reinforcement layers 4 disposed in a cylindrical form on the outer circumferential side of a cylindrical inner surface rubber layer 3. A group of auxiliary reinforcement layers 6 is deposited in a cylindrical form on the outer circumferential side of the group of main reinforcement layers 4 through a cylindrical-formed spilled-fluid absorption layer 5, and a cylindrical outer surface rubber layer 7 is provided on the outer circumferential side of the group of auxiliary reinforcement layers 6

The group of main reinforcement layers 4 comprises a plurality of reinforcement layers laminated to each other and made from rubber coating reinforcement cords which are composed of organic fiber cords and arranged slant with respect to the hose longitudinal direction. The reinforcement cords of adjacent reinforcement layers intersect to each other inversing the slant direction with respect to the hose longitudinal direction. The group of main reinforcement layers 4 acts as a pressure-resistant layer and tensile-resistant layer for the fluid being transferred inside the inner surface rubber layer 3. The number of reinforcement layers of the group of main reinforcement layers 4 may be, for example, 14 to 20.

The spilled fluid absorption layer 5 is made of sponge rubber, polyurethane foam or the like, and provides both functions as an absorption layer for absorbing fluid spilled by the damage of the group of main reinforcement layers 4 and as a float layer for floating the fluid transfer hose H1.

The group of auxiliary reinforcement layers 6 is composed of a plurality of reinforcement layers laminated to each other and made from rubber coating reinforcement cords which is composed of organic fiber cords and arranged slant with respect to the hose longitudinal direction. The reinforcement cords of adjacent reinforcement layers intersect to each other inversing the slant direction with respect to the hose longitudinal direction. The group of auxiliary reinforcement layers 6 has a function of a protection layer for preventing fluid spilled into the spilled fluid absorption layer 5 by the damage of the group of main reinforcement layers 4 from spilling outside. The slant angle, with respect to the hose longitudinal direction, of the reinforcement cords of the reinforcement layers slant to one side of the hose longitudinal direction, and the slant angle, with respect to the hose longitudinal direction, of the reinforcement cords of the reinforcement layers slant to the other side is approximately identical and is about 55 degrees, whereby the group of auxiliary reinforcement layers 6 has a structure which does not produce elongation even when the pressure of the fluid spilled by the damage of the group of main reinforcement layers 4 is applied to the group of auxiliary reinforcement layers 6. The number of reinforcement layers of the group of auxiliary reinforcement layers 6 may be, for example, 20 or so.

An electric conductor 9, which can be cut off when the group of main reinforcement layers 4 elongation-deforms by the damage thereof, extends on the outer circumferential surface 4a of the group of main reinforcement layers 4 along the hose longitudinal direction, and its both ends 9a, 9b are fixed to the outer circumferential surface 4a. The electric conductor 9 is made from metal wire such as copper wire, and at least two points in the longitudinal direction thereof, preferably, at least the both ends 9a,9b mentioned above, may be fixed to the outer circumferential surface 4a of the group of main reinforcement layers 4.

A light (alarm means) 10, which is a light-emitting diode, is connected in parallel to the electric conductor 9, and a resistor 11 and direct current power supply 12 is connected in series to a connection of the electric conductor 9 and the light 10. The light 10, resistor 11 and direct current power supply 12 are contained in a housing section 13 placed at an end 1A of the hose body 1. In order to find a damaged hose more easily, Fig. 1 shows an embodiment in which the housing section 13 is provided at both ends 1 A of the hose body1, and the light 10, resistor 11, and direct current power supply 12 are respectively contained in each housing section 13. In Fig. 3, one housing section 13 is omitted.

According to the fluid transfer hose H1 described above, when the group of main reinforcement layers 4 is broken by the fluid transferred in the inner surface rubber layer 3, the reinforcement cords of the group of main reinforcement layers 4 are cut off at that broken position. The reinforcement cords, which have lost their tensile balance by this cutting, extends in the hose longitudinal direction reducing the slant angle thereof. Therefore, the group of main reinforcement layers 4 extends in the hose longitudinal direction, thereby pulling and cutting the electric conductor 9. As a result, the light 10 is supplied with current and turns on. Consequently, the operator can easily and securely find the damage of the group of main reinforcement layers 4 by the lightning of the light 10 from a remote site or at night.

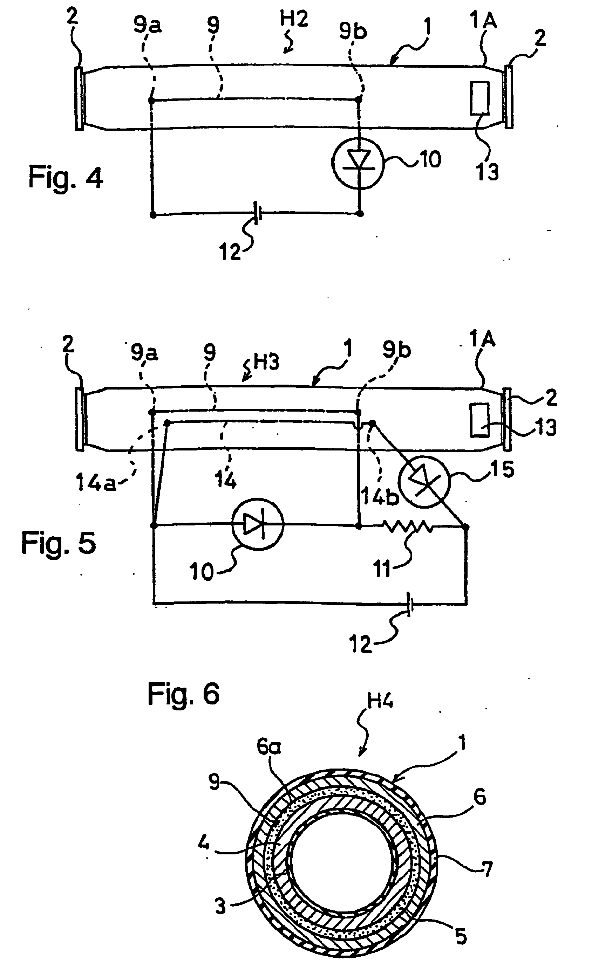

Fig. 4 shows another embodiment of the fluid transfer hose of the present invention. This embodiment is the same as Fig. 3 described above except that an electric conductor 9, light 10, and direct current power supply 12 are connected in series and a resistor 11 is not provided. The lit light 10 of this fluid transfer hose H2 turns off when the electric conductor 9 is cut off. By finding this, the operator can know the damage of the group of main reinforcement layers 4.

Fig. 5 shows still another embodiment of the fluid transfer hose of the present invention. The fluid transfer hose H3 of this embodiment is the same as Fig. 3 except that it further includes a second electric conductor 14 that can also be cut off similarly to the above electric conductor 9, and a second light 15 of an light-emitting diode. The second electric conductor 14 and the second light 15 connected in series are connected in parallel to the light 10 and the resistor 11. Both ends 14a, 14b of the second electric conductor 14 extending along the hose longitudinal direction are fixed to the outer circumferential surface 4a of the group of main reinforcement layers 4. The second light 15 is installed in the housing section 13. The lights 10, 15 emit light in different color.

In this fluid transfer hose H3, the lit light 15 turns off and the light 10 turns on when the electric conductors 9, 14 are cut off. The operator can know the damage of the group of main reinforcement layers 4 by discovering this. The light-emitting color of the light 10 can be, for example, red, and the light-emitting color of the light 15 can be, for instance, blue.

Although, in the embodiments of Fig. 3 to 5, the electric conductor 9 or electric conductors 9, 14 are attached on the outer circumferential surface 4a of the group of main reinforcement layers 4, the electric conductor 9 or electric conductors 9, 14 may alternatively be fixed to the inner circumferential surface of the group of main reinforcement layers 4 or the outer circumferential surface of the inner surface rubber layer 3, or can be arranged on the inner circumferential surface of the inner surface rubber layer 3, so the electric conductors 9, 15 can be attached to the part of the hose radially inner than the spilled fluid absorption layer 5. Preferably, the electric conductors 9, 14 are fixed to the outer circumferential surface 4a of the group of main reinforcement layers 4, thereby allowing the electric conductors 9, 14 to be easily attached when the hose is manufactured.

When the whole or the majority of the electric conductors 9, 14 is to be fixed to the hose body 1, the electric conductors 9, 14 may be provided in a way to extend in the hose longitudinal direction, and attached, for instance, helically with respect to the hose longitudinal direction. The electric conductors 9, 14 may adopt any arrangement structure, provided that they can be cut off.

The group of auxiliary reinforcement layers 0 may adopt a structure, described below, which can have elongation in the hose longitudinal direction or radial direction, or can generate distortion with respect to the hose circumferential direction, under the pressure of the fluid spilled from the group of main reinforcement layers.

Fig. 6 shows still another embodiment of the fluid transfer hose of the present invention. The fluid transfer hose H4 of this embodiment is the same as Fig. 3 except that the electric conductor 9 is fixed to the inner circumferential surface 6a of the group of auxiliary reinforcement layers 6. In addition, the reinforcement cords of the reinforcement layers of the group of auxiliary reinforcement layers 6 have a larger slant angle (about 56 to 86 degrees) with respect to the hose longitudinal direction, and when the group of auxiliary reinforcement layers 6 is submitted to the pressure of the fluid spilled by the damage of the group of main reinforcement layers 4, the group of auxiliary reinforcement layers 4 deforms by elongating in the hose longitudinal direction, through the elongation of the reinforcement cords in the hose longitudinal direction by reducing the slant angle. The electric conductor 9 is configured to be cut off by the elongation of the group of auxiliary reinforcement layers 6.

The hoses of Figs. 4, 5 can also adopt this arrangement. In the case of Fig. 5, the electric conductors 9, 14 can be attached on the inner circumferential surface 6a of the group of auxiliary reinforcement layers 6

Thus, the operator can easily and securely find the damage of the group of main reinforcement layers 4, because the light 10 turns on or turns off, or the lit light 15 turns off, and the light 10 turns on, also by attaching the electric conductor 9 or electric conductors 9, 14 to the group of auxiliary reinforcement layers 6 having a structure which can elongate in the hose longitudinal direction.

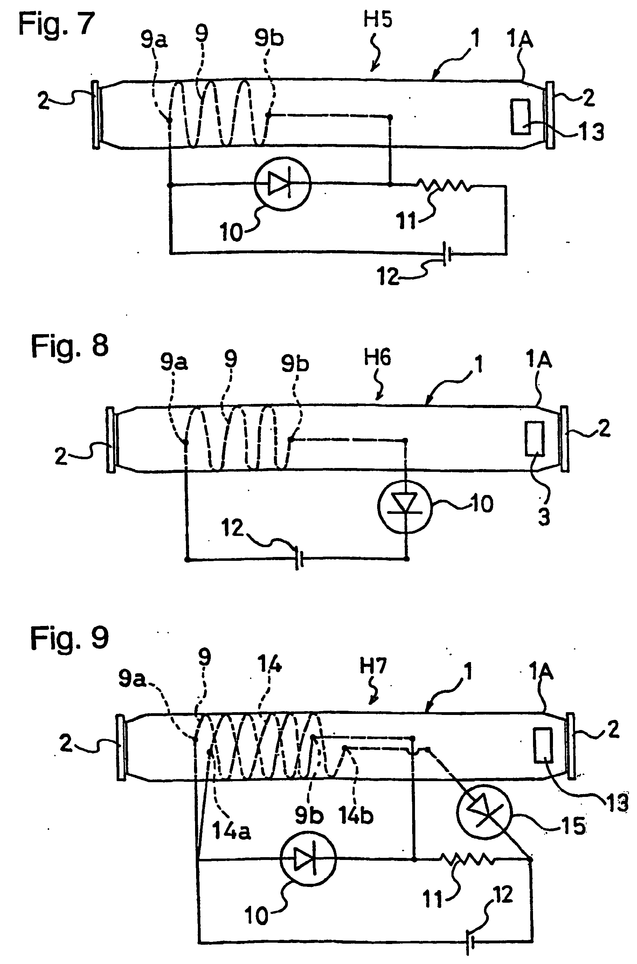

Figs. 7 to 9 show still another embodiments of the fluid transfer hoses of the present invention. In each hose of these embodiments, the group of auxiliary reinforcement layers 6 has a structure of extending in the hose radial direction, in place of the structure in the fluid transfer hose H4 of Fig. 6 which extends in the hose longitudinal direction. The reinforcement cords of the reinforcement layers of the group of auxiliary reinforcement layers 6 have a smaller slant angle (about 0 to 54 degrees) with respect to the hose longitudinal direction, and when the group of auxiliary reinforcement layers 6 is submitted to the pressure of the fluid spilled by the damage of the group of main reinforcement layers 4, the group of auxiliary reinforcement layers 6 elongates radially, through the radial elongation of the reinforcement layers, after a complete elongation of the reinforcement cords in the hose longitudinal direction.

The fluid transfer hose H5 of Fig. 7 has the same circuit configuration as Fig. 3, the electric conductor 9 is wound helically along the inner circumferential surface 6a of the group of auxiliary reinforcement layers 6 having the aforementioned structure of extending in the hose radial direction, and a plurality of points including both ends 9a, 9b thereof are fixed to the inner circumferential surface 6a. The light 10 turns on when the electric conductor 9 is cut off by the elongation of the group of auxiliary reinforcement layers 6 in the hose radial direction.

The fluid transfer hose H6 of Fig. 8 has the same circuit configuration as Fig. 4, the electric conductor 9 is wound helically along the inner circumferential surface 6a of the group of auxiliary reinforcement layers 6, and a plurality of points including both ends 9a, 9b thereof are fixed to the inner circumferential surface 6a. The light 10 turns off when the electric conductor 9 is cut off by the elongation of the group of auxiliary reinforcement layers 6 in the hose radial direction.

The fluid transfer hose H7 of Fig. 9 has the same circuit configuration as Fig. 5, the electric conductors 9, 14 are wound helically along the inner circumferential surface 6a of the group of auxiliary reinforcement layers 6, and a plurality of points including both ends 9a, 9b and 14a, 14b thereof are fixed to the inner circumferential surface 6a. The lit light 15 turns off and the light 10 turns on when the electric conductors 9, 14 are cut off by the elongation of the group of auxiliary reinforcement layers 6 in the hose radial direction.

The electric conductor 9 or electric conductors 9, 14 are wound helically in the fluid transfer hoses H5 to H7 of the above embodiments in Figs. 7 to 9; however, the electric conductor 9 or electric conductors 9, 14 may also be wound in a way to simply extend in the circumferential direction.

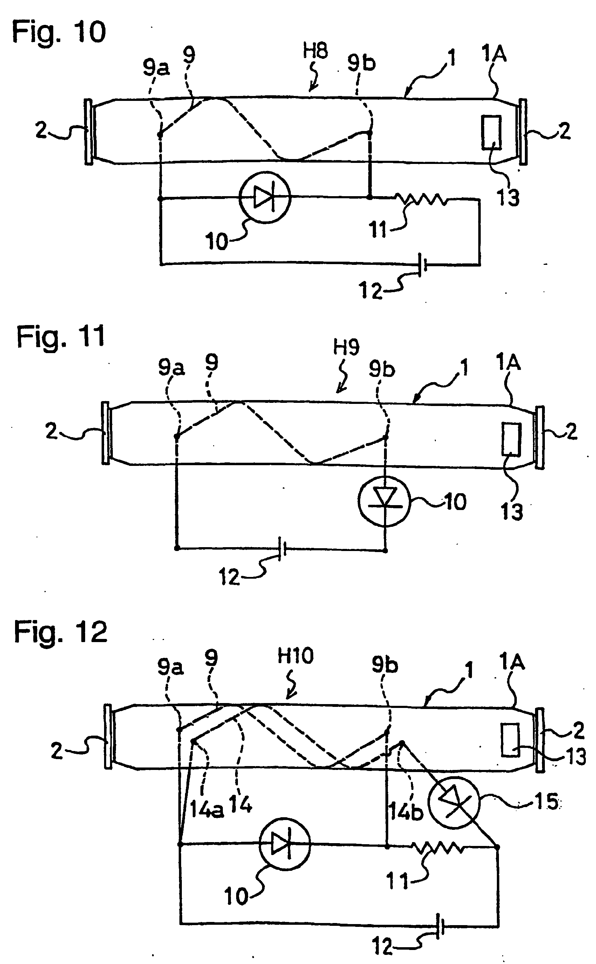

Figs. 10 to 12 show still another embodiments of the fluid transfer hoses of the present invention. In each hose of these embodiments, the group of auxiliary reinforcement layers 6 has a structure of distorting with respect to the hose longitudinal direction, in place of the structure in the fluid transfer hose H4 of Fig. 6 which extends in the hose longitudinal direction. In this group of auxiliary reinforcement layers 6, the slant angle of the reinforcement cords of the reinforcement layers slant to one side with respect to the hose longitudinal direction is different form the slant angle of the reinforcement cords of the reinforcement layers slant to the other side (for instance, 55 degrees for one side and 60 degrees for the other side). When the group of auxiliary reinforcement layers 6 is submitted to the pressure of the fluid spilled by the damage of the group of main reinforcement layers 4, the group of auxiliary reinforcement layers 6 deforms by distorting with respect to the hose longitudinal direction, by the difference of the elongation rates between the reinforcement cords extending slant to one side and the reinforcement cords extending slant to the other side with respect to the hose longitudinal direction.

The fluid transfer hose H8 of Fig. 10 has the same circuit configuration as Fig. 3, the electric conductor 9 is wound helically in the direction opposite to the distortion direction of the group of auxiliary reinforcement layers 6 along the inner circumferential surface 6a of the group of auxiliary reinforcement layers 6 having the structure of distorting with respect to the hose longitudinal direction, and a plurality of points including both ends 9a, 9b thereof are fixed to the inner circumferential surface 6a. The light 10 turns on when the electric conductor 9 is cut off by the distortion of the group of auxiliary reinforcement layers 6 with respect to the hose longitudinal direction.

The fluid transfer hose H9 of Fig. 11 has the same circuit configuration as Fig. 4, the electric conductor 9 is wound helically in the direction opposite to the distortion direction along the inner circumferential surface 6a of the group of auxiliary reinforcement layers 6, and a plurality of points including both ends 9a, 9b thereof are fixed to the inner circumferential surface 6a. The light 10 turns off when the electric conductor 9 is cut off by the distortion of the group of auxiliary reinforcement layers 6.

The fluid transfer hose H10 of Fig. 12 has the same circuit configuration as Fig. 5, the electric conductors 9, 14 are wound helically in the direction opposite to the distortion direction along the inner circumferential surface 6a of the group of auxiliary reinforcement layers 6, and a plurality of points including both ends 9a, 9b and 14a, 14b thereof are fixed to the inner circumferential surface 6a. The lit light 15 turns off and the light 10 turns on when the electric conductors 9, 14 are cut off by the distortion of the group of auxiliary reinforcement layers 6.

In the embodiments of Figs. 7 to 12, the electric conductor 9 or electric conductors 9, 14 are provided on the inner circumferential surface 6a of the group of auxiliary reinforcement layers 6; however, they may also be fixed to the outer circumferential surface of the group of auxiliary reinforcement layers 6 or the inner circumferential surface of the outer surface rubber layer 7, and also they can be arranged on the outer circumferential surface of the outer surface rubber layer 7, so the electric conductor 9 or electric conductors 9, 14 can be attached to the part of the hose radially outer than the spilled fluid absorption layer 5. Preferably, the electric conductor 9 or electric conductors 9, 14 are fixed to the inner circumferential surface 6a of the group of auxiliary reinforcement layers 6, to facilitate the attachment of the electric conductors 9, 14 during the hose manufacturing.

Although the electric conductors 9, 14 are made from metal wire in the aforementioned embodiments, an electric conductive rubber may alternatively be used for the electric conductors 9, 14 in the present invention. In this case, the electric conductors 9, 14 elongate without being cut off, resulting in an increase of its resistance value. Thereby, as the current through the electric conductors 9, 14 is limited, the light 10 turns on in each fluid transfer hose of Figs. 3, 7, 10, the light 10 dims or turns off in each fluid transfer hose of Figs. 4, 8, 11, and the lit light 11 dims or turns off, while the light 10 turns on in each fluid transfer hose of Figs. 5, 9, 12.

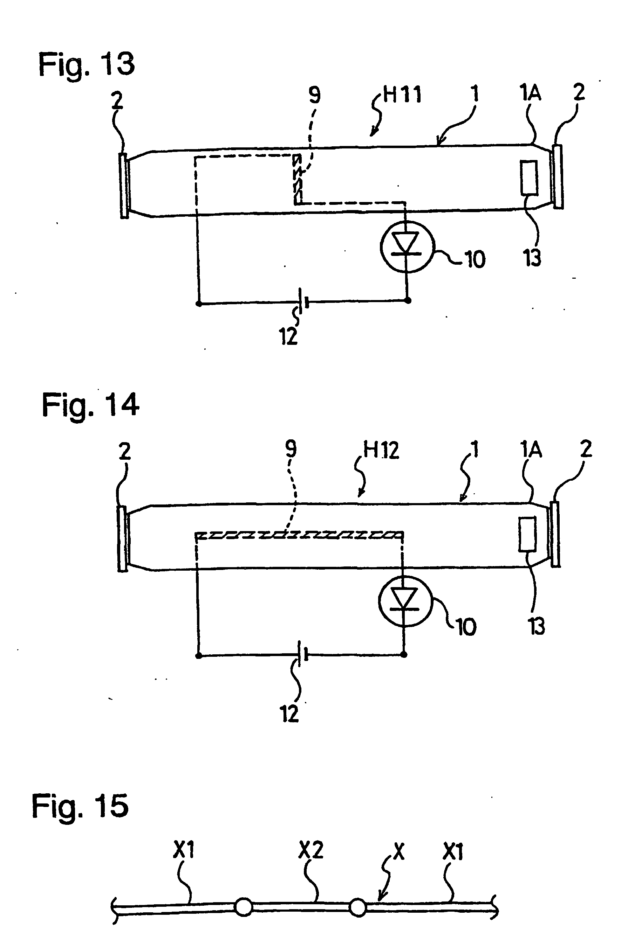

Figs. 13, 14 show still another embodiments of the fluid transfer hoses of the present invention. The fluid transfer hose H11 of Fig. 13 has a structure in which the group of auxiliary reinforcement layers 6 can deform by extending in the hose longitudinal direction. The electric conductor 9, made of electric conductive rubber with a high resistance value, extends in the hose circumferential direction. The electric conductor 9 is fixed by adhesion to the inner circumferential surface 6a of the group of auxiliary reinforcement layers 6. When the group of auxiliary reinforcement layers 6 in this fluid transfer hose H11 deforms by elongating in the hose longitudinal direction, the electric conductive rubber is pulled in the hose longitudinal direction, increasing the cross section thereof. As a result, the light 10 turns on, since the resistance value of the electric conductive rubber diminishes and the intensity of the current flowing therein increases.

The fluid transfer hose H12 of Fig. 14 has a structure for the elongation of the group of auxiliary reinforcement layers 6 in the hose radial direction. Similarly to the forgoing, the electric conductor 9, made of electric conductive rubber of a high resistance value, extends in the hose longitudinal direction, and is fixed to the inner circumferential surface 6a of the group of auxiliary reinforcement layers 6. When the group of auxiliary reinforcement layers 6 in this fluid transfer hose H12 deforms by elongating in the hose radial direction, the electric conductive rubber is pulled in the hose circumferential direction, increasing the cross section thereof. As a result, the resistance value of the electric conductive rubber diminishes, and the light 10 turns on.

Although the embodiment of Fig. 13 has the structure to deform the group of auxiliary reinforcement layers 6 by elongating in the hose longitudinal direction, it may also have a structure which deforms by distorting in the hose longitudinal direction. Thereby, when the hose deforms by distortion, the electric conductive rubber is pulled in the hose distortion direction, increasing the cross section thereof, and the light 10 turns on.

The embodiments of Figs. 13, 14 illustrate fluid transfer hoses having the circuit configuration shown in Fig. 4. However, each fluid transfer hose H11, H12 of Figs. 13, 14 can also employ the circuit configuration shown in Fig. 3 or in Fig. 5. That is, each fluid transfer hose of Figs. 13 and 14 may be arranged such that the light 10 tuns off or dims by the increase of the resistance value of the electric conductive rubber, or the light 10 turns on and the light 15 turns off or dims by the reduction of the resistance value of the electric conductive rubber.

Fig. 15 shows another embodiment of the electric conductors 9, 14 described above. This electric conductor X comprises two metal wires or electric conductive rubber members X1 and a connector X2 connected therebetween; the connector X2 can be cut off or separated from the metal wire or electric conductive rubber member X1 by the damage of the group of main reinforcement layers 4 or by the pressure of the fluid spilled into the spilled fluid absorption layer 5 due to the damage of the group of main reinforcement layers 4. The electric conductor X of such configuration can also be used advantageously.

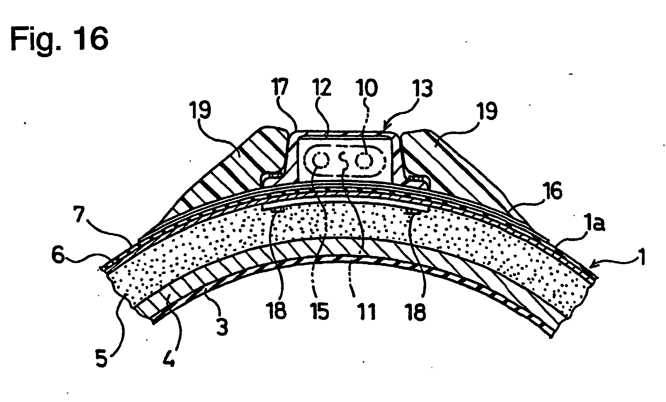

Fig. 16 shows an embodiment of the attachment structure of the housing section 13. A transparent resin cover 17 having a housing space is fixed to a surface 1 a of the hose body 1 through a seal member 16 by a fixing means 18 comprising bolts and nuts, making a sealing structure that prevents sea water from penetrating into the transparent resin cover 17. Lights 10, 15, resistor 11, direct current power supply 12 are contained in this transparent resin cover 17. A protective cover 19 radially outwardly projecting slightly higher than the transparent resin cover 17 is affixed to both sides of the transparent resin cover 17 in such a way to protect the transparent resin cover 17 in case of collision.

In the present invention, as the aforementioned direct current power supply 12, a solar battery system can be used advantageously. In the above-described embodiments, organic fiber cords are used for the reinforcement cords of the reinforcement layers of the group of main reinforcement layers 4; however, steel cords can alternatively be employed. The reinforcement layers of the group of main reinforcement layers 4 and the reinforcement layers of the group of auxiliary reinforcement layers 6 each may be provided to comprise an even number of reinforcement layers, pairing two adjacent reinforcement layers having their reinforcement cords crossing each other.

In the fluid transfer hoses described above in Figs. 3, 5, 7, 9, 10, 12, 13, 14, a transmitter emitting a sound wave or electromagnetic wave signal can be used as alarm means, in place of the light 10. In case of using a transmitter emitting an electromagnetic wave signal, a receiver for receiving the same is provided in a place where the operator can easily check the receiver.

Although any colored lines used in the prior art for detecting the damage of the layer group of main reinforcements are not provided on the outer circumferential surface of the outer surface rubber layer of each fluid transfer hose described above, such lines (stripes) may also be formed on the outer circumferential surface of the outer surface rubber layer of each fluid transfer hose of the present invention, in which the group of auxiliary reinforcement layers can have elongation or distortion.

As described hereinabove, the operator can easily and securely find the damage of the group of main reinforcement layers even from a remote site or at night, because the alarm means issues a warning when the conductor is cut off or its resistance value varies by the damage of the group of main reinforcement layers or by the pressure of the fluid spilled into the spilled fluid absorption layer due to the damage of the group of main reinforcement layers.

Although the invention has been illustrated and described with respect to preferred embodiments, it is obvious that equivalent alterations and modifications will occur to those skilled in the art upon the reading and understanding of this specification. The present invention includes all such equivalent alterations and modifications, and is limited only by the scope of the appended claims.

## Claims

1. A fluid transfer hose having a hose body which comprises an inner surface rubber layer (3), a group of main reinforcement layers (4), a spilled fluid absorption layer (5), a group of auxiliary reinforcement layers (6), and an outer surface rubber layer (7) disposed in that order from the hose inner circumferential side, the group of main reinforcement layers (4) having a plurality of reinforcement layers laminated to each other and made from rubber coating reinforcement cords that are slant to the hose longitudinal direction so that the reinforcement cords of adjacent reinforcement layers intersect each other, said group of auxiliary reinforcement layers having a plurality of reinforcement layers laminated to each other and made from rubber coating reinforcement cords, wherein the hose body is provided with at least one electric conductor (9) which can be cut off or changes its resistance value by the damage of said group of main reinforcement layers (4) or by the pressure of the fluid spilled into the spilled fluid absorption layer (5) due to the damage of the group of main reinforcement layers (4), and an alarm means (10), connected to the electric conductor (9), for emitting an alarm when said electric conductor (9) is cut off or the resistance value varies.

2. The fluid transfer hose of claim 1, wherein said electric conductor (9) is fixed to extend in the hose longitudinal direction radially inner than said spilled fluid absorption layer (5) in the hose radial direction.

3. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have elongation in the hose longitudinal direction by the pressure of the fluid spilled into the spilled fluid absorption layer due to the damage of said group of main reinforcement layers (4), and said electric conductor (9) is fixed to extend in the hose longitudinal direction outer than said spilled fluid absorption layer (5) in the hose radial direction.

4. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have elongation in the hose radial direction by the pressure of the fluid spilled into the spilled fluid absorption layer (5) due to the damage of said group of main reinforcement layers (4), and said electric conductor (9) is fixed to extend in the hose circumferential direction radially outer than said spilled fluid absorption layer (5) in the hose radial direction.

5. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have distorting with respect to the hose longitudinal direction by the pressure of the fluid spilled into the spilled fluid absorption layer (5) due to the damage of said group of main reinforcement layers (4), and said electric conductor (9) is fixed helically in a direction opposed to the distortion direction of said group of auxiliary reinforcement layers (6) radially outer than said spilled fluid absorption layer (5) in the hose radial direction.

6. The fluid transfer hose of one of claims 1 to 5, wherein said electric conductor to be cut off is made from a metal wire (9).

7. The fluid transfer hose of one of claims 1 to 5, wherein said electric conductor (9) of which resistance value is changeable is made of electrically conductive rubber.

8. The fluid transfer hose of one of claims 1 to 5, wherein said electric conductor (9) to be cut comprises a metal wire and/or electric conductive rubber member (X1), and a connector (X2) which is connected thereto and is disconnected by the damage of said group of main reinforcement layers (4) or by the pressure of the fluid spilled into the spilled fluid absorption layer (5) due to the damage of the group of main reinforcement layers (4).

9. The fluid transfer hose of one of claims 1 to 8, wherein said alarm means comprises a light (10) which turns on by the cutting off of said electric conductor (9) or increase of the resistance value of said electric conductor (9).

10. The fluid transfer hose of one of claims 1 to 8, wherein said alarm means comprises a light (10) which turns off by the cutting off of said electric conductor (9) or increase of the resistance value of said electric conductor (9).

11. The fluid transfer hose of one of claims 1 to 8, wherein said alarm means comprises a light (10) which turns on and a light (15) which turns off by the cutting off of the electric conductor (9, 14) or increase of the resistance value of the electric conductor (9, 14).

12. The fluid transfer hose of one of claims 1 to 8, wherein said alarm means comprises a transmitter for emitting a signal of sound wave or electromagnetic wave by the cutting off of said electric conductor (9) or increase of the resistance value of said electric conductor (9).

13. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have elongation in the hose longitudinal direction by the pressure of the fluid spilled into the spilled fluid absorption layer (5) due to the damage of said group of main reinforcement layers (4), and said electric conductor (9) of which resistance value is varied is made of electrically conductive rubber, and said electric conductor (9) is fixed to extend in the hose Circumferential direction radially outer than said spilled fluid absorption layer in the hose radial direction.

14. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have elongation in the hose radial direction by the pressure of the fluid spilled into the spilled fluid absorption layer (5) due to the damage of said group of main reinforcement layers (4), and said electric conductor (9) of which resistance value is varied is made of electrically conductive rubber, and said electric conductor (9) is fixed to extend in the hose longitudinal direction radially outer than said spilled fluid absorption layer in the hose radial direction.

15. The fluid transfer hose of claim 1, wherein the reinforcement layers of said group of auxiliary reinforcement layers (6) are disposed so that said reinforcement cords of adjacent reinforcement layers intersect each other inversing the slant direction with respect to the hose longitudinal direction, and said group of auxiliary reinforcement layers (6) are arranged so as to have distorting with respect to the hose longitudinal direction by the pressure of the fluid spilled into the spilled fluid absorption layer (5) due to the damage of said group of main reinforcement layers (4), and said electric conductor (9) of which resistance value is varied is made of electrically conductive rubber, and said electric conductor (9) is fixed to extend in the hose circumferential direction radially outer than said spilled fluid absorption layer (5) in the hose radial direction.

16. The fluid transfer hose of one of claims 13 to 15, wherein said alarm means comprises a light (10) which turns on by the cutting off of said electric conductor (9) or increase of the resistance value of said electric conductor (9).

17. The fluid transfer hose of one of claims 13 to 15, wherein said alarm means comprises a light (10) which turns off by the cutting off of said electric conductor (9) or increase of the resistance value of said electric conductor (9).

18. The fluid transfer hose of one of claims 13 to 15, wherein said alarm means comprises a light (10) which turns on and a light (15) which turns off by the cutting off of the electric conductor (9, 14) or increase of the resistance value of the electric conductor (9, 14).

19. The fluid transfer hose of one of claims 13 to 15, wherein said alarm means comprises a transmitter for emitting a signal of sound wave or electromagnetic wave by the cutting off of said electric conductor (9) or increase of the resistance value of said electric conductor (9).

20. The fluid transfer hose of one of claims 1 to 19, wherein a power supply (12) of the circuit connecting said electric conductor (9) and said alarm means (10) is a solar battery.

21. The fluid transfer hose of one of claims 3, 4, 5, 13, 14 or 15, wherein said outer surface rubber layer (7) has stripes on an outer circumferential surface thereof.

## Patentansprüche

1. Schlauch zum Überführen eines Fluids mit einem Schlauchkörper, der eine innere Oberflächengummischicht (3), eine Gruppe von Hauptverstärkungsschichten (4), eine Schicht (5) zur Absorption von ausgelaufenem Fluid, eine Gruppe von Hilfsverstärkungsschichten (6) und eine äußere Oberflächengummischicht (7) umfasst, die in dieser Reihenfolge von der inneren Umfangsseite des Schlauches angeordnet sind, wobei die Gruppe von Hauptverstärkungsschichten (4) mehrere Verstärkungsschichten aufweist, die aneinander geschichtet und aus Verstärkungsschnüren mit Gummibeschichtung gefertigt sind, die bezüglich der Längsrichtung des Schlauchs geneigt sind, so dass sich die Verstärkungsschnüre von benachbarten Verstärkungsschichten überschneiden, wobei die Gruppe von Hilfsverstärkungsschichten mehrere Verstärkungsschichten aufweist, die aneinander geschichtet und aus Verstärkungsschnüren mit Gummibeschichtung gefertigt sind, wobei der Schlauchkörper mit mindestens einem elektrischen Leiter (9) bereitgestellt wird, der unterbrochen werden kann oder seinen Widerstandswert durch die Beschädigung der Gruppe von Hauptverstärkungsschichten (4) oder durch den Druck des Fluids verändern kann, das aufgrund der Beschädigung der Gruppe von Hauptverstärkungsschichten (4) in die Schicht (5) zur Absorption von ausgelaufenem Fluid läuft, und ein Alarmmittel (10), das mit dem elektrischen Leiter (9) verbunden ist, um einen Alarm auszusenden, wenn der elektrische Leiter (9) unterbrochen wird oder sich der Widerstandswert verändert.

2. Schlauch zum Überführen eines Fluids nach Anspruch 1, wobei der elektrische Leiter (9) derart befestigt ist, dass er sich in die Längsrichtung des Schlauchs radial weiter nach innen erstreckt als die Schicht (5) zur Absorption von ausgelaufenem Fluid in die radiale Richtung des Schlauchs.

3. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei die Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht zur Absorption von ausgelaufenem Fluid läuft, eine Verlängerung in Längsrichtung des Schlauchs aufweist, und wobei der elektrische Leiter (9) derart befestigt ist, dass er sich in die Längsrichtung des Schlauchs weiter nach außen erstreckt als die Schicht (5) zur Absorption von ausgelaufenem Fluid in die radiale Richtung des Schlauchs.

4. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht (5) zur Absorption von ausgelaufenem Fluid läuft, eine Verlängerung in die radiale Richtung des Schlauchs aufweist, und wobei der elektrische Leiter (9) derart befestigt ist, dass er sich in die Umfangsrichtung des Schlauchs radial weiter nach außen erstreckt als die Schicht (5) zur Absorption von ausgelaufenem Fluid in die Radialrichtung des Schlauchs.

5. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei die Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht (5) zur Absorption von ausgelaufenem Fluid läuft, bezüglich der Längsrichtung des Schlauchs verdreht ist, und wobei der elektrische Leiter (9) schneckenförmig in eine Richtung, die der Richtung der Verdrehung der Gruppe von Hilfsverstärkungsschichten (6) entgegengesetzt ist, radial weiter außen befestigt ist als die Schicht (5) zur Absorption von ausgelaufenem Fluid in die radiale Richtung des Schlauchs.

6. Schlauch zum Überführen eines Fluids nach einem der Ansprüche 1 bis 5, wobei der zu unterbrechende elektrische Leiter aus einem Metalldraht (9) gefertigt ist.

7. Schlauch zum Überführen eines Fluids nach einem der Ansprüche 1 bis 5, wobei der elektrische Leiter (9), dessen Widerstandswert veränderbar ist, aus einem elektrisch leitfähigen Gummi gefertigt ist.

8. Schlauch zum Überführen eines Fluids nach einem der Ansprüche 1 bis 5, wobei der zu unterbrechende elektrische Leiter (9) einen Metalldraht und/oder ein elektrisch leitfähiges Gummiglied (X1) und eine Verbindungseinheit (X2) umfasst, die damit verbunden ist und durch die Beschädigung der Gruppe von Hauptverstärkungsschichten (4) oder durch den Druck des Fluids, das aufgrund der Beschädigung der Gruppe von Hauptverstärkungsschichten (4) in die Schicht (5) zur Absorption von ausgelaufenem Fluid läuft, getrennt wird.

9. Schlauch zum Überführen eines Fluids nach einem der Ansprüche 1 bis 8, wobei das Alarmmittel ein Licht (10) umfasst, das sich durch das Unterbrechen des elektrischen Leiters (9) oder eine Erhöhung des Widerstandswerts des elektrischen Leiters (9) einschaltet.

10. Schlauch zum Überführen eines Fluids nach einem der Ansprüche 1 bis 8, wobei das Alarmmittel ein Licht (10) umfasst, das sich durch das Unterbrechen des elektrischen Leiters (9) oder eine Erhöhung des Widerstandswerts des elektrischen Leiters (9) ausschaltet.

11. Schlauch zum Überführen eines Fluids nach einem der Ansprüche 1 bis 8, wobei das Alarmmittel ein sich durch das Unterbrechen des elektrischen Leiters (9, 14) oder eine Erhöhung des Widerstandswerts des elektrischen Leiters (9, 14) einschaltendes Licht (10) und ein sich **dadurch** ausschaltendes Licht (15) umfasst.

12. Schlauch zum Überführen eines Fluids nach einem der Ansprüche 1 bis 8, wobei das Alarmmittel einen Sender zum Aussenden eines Signals von Schallwellen oder elektromagnetischen Wellen durch das Unterbrechen des elektrischen Leiters (9) oder eine Erhöhung des Widerstandswerts des elektrischen Leiters (9) umfasst.

13. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei die Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht (5) zur Absorption von ausgelaufenem Fluid läuft, eine Verlängerung in Längsrichtung des Schlauchs aufweist, und wobei der elektrische Leiter (9), dessen Widerstandswert verändert wird, aus elektrisch leitfähigem Gummi ist, und wobei der elektrische Leiter (9) derart befestigt ist, dass er sich in die Umfangsrichtung des Schlauchs radial weiter nach außen erstreckt als die Schicht zur Absorption von ausgelaufenem Fluid in die radiale Richtung des Schlauchs.

14. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei die Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht (5) zur Absorption von ausgelaufenem Fluid läuft, eine Verlängerung in die Längsrichtung des Schlauchs aufweist, und wobei der elektrische Leiter (9), dessen Widerstandswert verändert wird, aus elektrisch leitfähigem Gummi ist, und wobei der elektrische Leiter (9) derart befestigt ist, dass er sich in die Längsrichtung des Schlauchs radial weiter nach außen erstreckt als die Schicht zur Absorption von ausgelaufenem Fluid in die radiale Richtung des Schlauchs.

15. Schlauch zum Überführen eines Fluids nach Anspruch 1, wobei die Verstärkungsschichten der Gruppe von Hilfsverstärkungsschichten (6) derart angeordnet sind, dass sich die Verstärkungsschnüre von benachbarten Verstärkungsschichten überschneiden, wobei die Neigungsrichtung bezüglich der Längsrichtung des Schlauchs umgekehrt wird, und wobei die Gruppe von Hilfsverstärkungsschichten (6) derart angeordnet ist, dass sie durch den Druck des Fluids, das aufgrund der Beschädigung der Gruppe von Hauptverstärkungsschichten (4) in die Schicht (5) zur Absorption von ausgelaufenem Fluid läuft, in die Längsrichtung des Schlauchs verdreht ist, und wobei der elektrische Leiter (9), dessen Widerstandswert verändert wird, aus elektrisch leitfähigem Gummi ist, und wobei der elektrische Leiter (9) derart befestigt ist, dass er sich in die Umfangsrichtung des Schlauchs radial weiter nach außen erstreckt als die Schicht (5) zur Absorption von ausgelaufenem Fluid in die radiale Richtung des Schlauchs.

16. Schlauch zum Überführen eines Fluids nach einem der Ansprüche 13 bis 15, wobei das Alarmmittel ein Licht (10) umfasst, das sich durch das Unterbrechen des elektrischen Leiters (9) oder eine Erhöhung des Widerstandswerts des elektrischen Leiters (9) einschaltet.

17. Schlauch zum Überführen eines Fluids nach einem der Ansprüche 13 bis 15, wobei das Alarmmittel ein Licht (10) umfasst, das sich durch das Unterbrechen des elektrischen Leiters (9) oder eine Erhöhung des Widerstandswerts des elektrischen Leiters (9) ausschaltet.

18. Schlauch zum Überführen eines Fluids nach einem der Ansprüche 13 bis 15, wobei das Alarmmittel ein sich durch das Unterbrechen des elektrischen Leiters (9, 14) oder eine Erhöhung des Widerstandswerts des elektrischen Leiters (9, 14) einschaltendes Licht (10) und ein sich **dadurch** ausschaltendes Licht (15) umfasst.

19. Schlauch zum Überführen eines Fluids nach einem der Ansprüche 13 bis 15, wobei das Alarmmittel einen Sender zum Aussenden eines Signals von Schallwellen oder elektromagnetischen Wellen durch das Unterbrechen des elektrischen Leiters (9) oder eine Erhöhung des Widerstandswerts des elektrischen Leiters (9) umfasst.

20. Schlauch zum Überführen eines Fluids nach einem der Ansprüche 1 bis 19, wobei eine Energieversorgung (12) des Schaltkreises, der den elektrischen Leiter (9) und das Alarmmittel (10) verbindet, eine Solarbatterie ist.

21. Schlauch zum Überführen eines Fluids nach einem der Ansprüche 3, 4, 5, 13, 14 oder 15, wobei die äußere Oberflächengummischicht (7) auf einer äußeren Umfangsoberfläche davon Streifen aufweist.

## Revendications

1. Tuyau flexible de transfert de fluide présentant un corps de tuyau flexible qui comprend une couche en caoutchouc de surface interne (3), un groupe de couches de consolidation principales (4), une couche d'absorption de fluide déversé (5), un groupe de couches de consolidation auxiliaires (6), et une couche en caoutchouc de surface externe (7) disposés dans cet ordre depuis le côté circonférentiel interne du tuyau flexible, le groupe de couches de consolidation principales (4) présentant une pluralité de couches de consolidation stratifiées les unes par rapport aux autres et fabriquées à partir de cordages de consolidation à revêtement caoutchouc qui sont en inclinaison par rapport à la direction longitudinale du tuyau flexible de sorte que les cordages de consolidation des couches de consolidation adjacentes se croisent, ledit groupe de couches de consolidation auxiliaires présentant une pluralité de couches de consolidation stratifiées les unes par rapport aux autres et fabriquées à partir de cordages de consolidation à revêtement caoutchouc, dans lequel le corps de tuyau flexible est pourvu avec au moins un conducteur électrique (9) qui peut être mis hors circuit ou dont la valeur de résistance peut être changée par le dommage dudit groupe de couches de consolidation principales (4) ou par la pression du fluide déversé dans la couche d'absorption de fluide déversé (5) en raison du dommage du groupe de couches de consolidation principales (4), et un moyen d'alarme (10), raccordé au conducteur électrique (9), pour émettre une alarme quand ledit conducteur électrique (9) est mis hors circuit ou que la valeur de résistance varie.

2. Tuyau flexible de transfert de fluide selon la revendication 1, dans lequel ledit conducteur électrique (9) est fixé pour s'étendre dans la direction longitudinale de tuyau flexible de manière radialement plus à l'intérieur que ladite couche d'absorption de fluide déversé (5) dans la direction radiale de tuyau flexible.

3. Tuyau flexible de transfert de fluide selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale de tuyau flexible, et ledit groupe de couches de consolidation auxiliaires (6) est agencé de manière à présenter une élongation dans la direction longitudinale de tuyau flexible par la pression du fluide déversé dans la couche d'absorption de fluide déversé en raison du dommage dudit groupe de couches de consolidation principales (4), et ledit conducteur électrique (9) est fixé pour s'étendre dans la direction longitudinale de tuyau flexible plus à l'extérieur que ladite couche d'absorption de fluide déversé (5) dans la direction radiale de tuyau flexible.

4. Tuyau flexible de transfert de fluide selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale de tuyau flexible, et ledit groupe de couches de consolidation auxiliaires (6) est agencé de manière à présenter une élongation dans la direction radiale de tuyau flexible par la pression du fluide déversé dans la couche d'absorption de fluide déversé (5) en raison du dommage dudit groupe de couches de consolidation principales (4), et ledit conducteur électrique (9) est fixé pour s'étendre dans la direction circonférentielle de tuyau flexible de manière radialement plus à l'extérieur que ladite couche d'absorption de fluide déversé (5) dans la direction radiale de tuyau flexible.

5. Tuyau flexible de transfert de fluide selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale de tuyau flexible, et ledit groupe de couches de consolidation auxiliaires (6) est agencé de manière à présenter une distorsion par rapport à la direction longitudinale de tuyau flexible par la pression du fluide déversé dans la couche d'absorption de fluide déversé (5) en raison du dommage dudit groupe de couches de consolidation principales (4), et ledit conducteur électrique (9) est fixé de manière hélicoïdale dans une direction opposée à la direction de distorsion dudit groupe de couches de consolidation auxiliaires (6) radialement plus à l'extérieur que ladite couche d'absorption de fluide déversé (5) dans la direction radiale de tuyau flexible.

6. Tuyau flexible de transfert de fluide selon l'une des revendications 1 à 5, dans lequel ledit conducteur électrique à mettre hors circuit est fabriqué à partir d'un fil métallique (9).

7. Tuyau flexible de transfert de fluide selon l'une des revendications 1 à 5, dans lequel ledit conducteur électrique (9) dont la valeur de résistance peut être changée est fabriqué à partir d'un caoutchouc conducteur du point de vue électrique.

8. Tuyau flexible de transfert de fluide selon l'une des revendications 1 à 5, dans lequel ledit conducteur électrique (9) à mettre hors circuit comprend un fil métallique et/ou un élément de caoutchouc conducteur du point de vue électrique (X1), et un connecteur (X2) qui est connecté à celui-ci et est déconnecté par le dommage dudit groupe de couches de consolidation principales (4) ou par la pression du fluide déversé dans la couche d'absorption de fluide déversé (5) en raison du dommage du groupe de couches de consolidation principales (4).

9. Tuyau flexible de transfert de fluide selon l'une des revendications 1 à 8, dans lequel ledit moyen d'alarme comprend une lumière (10) qui s'allume par la mise hors tension dudit conducteur électrique (9) ou l'augmentation de la valeur de résistance dudit conducteur électrique (9).

10. Tuyau flexible de transfert de fluide selon l'une des revendications 1 à 8, dans lequel ledit moyen d'alarme comprend une lumière (10) qui s'allume par la mise hors tension dudit conducteur électrique (9) ou l'augmentation de la valeur de résistance dudit conducteur électrique (9).

11. Tuyau flexible de transfert de fluide selon l'une des revendications 1 à 8, dans lequel ledit moyen d'alarme comprend une lumière (10) qui s'allume et une lumière (15) qui s'éteint par la mise hors tension du conducteur électrique (9, 14) ou l'augmentation de la valeur de résistance du conducteur électrique (9, 14).

12. Tuyau flexible de transfert de fluide selon l'une des revendications 1 à 8, dans lequel ledit moyen d'alarme comprend un émetteur pour émettre un signal d'onde sonore ou d'onde électromagnétique par la mise hors tension dudit conducteur électrique (9) ou l'augmentation de la valeur de résistance dudit conducteur électrique (9).

13. Tuyau flexible de transfert selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale du tuyau flexible, et ledit groupe de couches de consolidation auxiliaires (6) est agencé de manière à présenter une élongation dans la direction longitudinale de tuyau flexible par la pression du fluide déversé dans la couche d'absorption de fluide déversé (5) en raison du dommage dudit groupe de couches de consolidation principales (4), et ledit conducteur électrique (9) dont la valeur de résistance est variée est fabriqué à partir de caoutchouc conducteur du point de vue électrique, et ledit conducteur électrique (9) est fixé pour -s'étendre dans la direction circonférentielle du tuyau flexible de manière radialement plus à l'extérieur que ladite couche d'absorption de fluide déversé dans la direction radiale du tuyau flexible.

14. Tuyau flexible de transfert de fluide selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale du tuyau flexible, et ledit groupe de couches de consolidation auxiliaires (6) est agencé de manière à présenter une élongation dans la direction radiale du tuyau flexible par la pression du fluide déversé dans la couche d'absorption de fluide déversé (5) en raison du dommage dudit groupe de couches de consolidation principales (4), et ledit conducteur électrique (9) dont la valeur de résistance est variée est fabriqué de caoutchouc conducteur du point de vue électrique, et ledit conducteur (9) est fixé pour s'étendre dans la direction longitudinale de tuyau flexible de manière radialement plus à l'extérieur que ladite couche d'absorption de fluide déversé dans la direction radiale de tuyau flexible.

15. Tuyau flexible de transfert de fluide selon la revendication 1, dans lequel les couches de consolidation dudit groupe de couches de consolidation auxiliaires (6) sont disposées de sorte que lesdits cordages de consolidation des couches de consolidation adjacentes se croisent, inversant la direction d'inclinaison par rapport à la direction longitudinale de tuyau flexible, et ledit groupe de couches de consolidation auxiliaires (6) est agencé de manière à présenter une distorsion par rapport à la direction longitudinale de tuyau flexible par la pression du fluide déversé dans la couche d'absorption de fluide déversé (5) en raison du dommage dudit groupe de couches de consolidation principales (4) et ledit conducteur électrique (9) dont la valeur de résistance est varié est fabriqué à partir d'un caoutchouc conducteur du point de vue électrique, et ledit conducteur électrique (9) est fixé pour s'étendre dans une direction circonférentielle de tuyau flexible de manière radialement plus à l'extérieur que ladite couche d'absorption de fluide déversé (5) dans la direction radiale de tuyau flexible.

16. Tuyau flexible de transfert de fluide selon l'une des revendications 13 à 15, dans lequel ledit moyen d'alarme comprend une lumière (10) qui s'allume par la mise hors tension dudit conducteur électrique (9) ou augmente la valeur de résistance dudit conducteur électrique (9).

17. Tuyau flexible de transfert de fluide selon l'une des revendications 13 à 15, dans lequel ledit moyen d'alarme comprend une lumière (10) qui s'éteint par la mise hors tension dudit conducteur électrique (9) ou l'augmentation de la valeur de résistance dudit conducteur électrique (9)

18. Tuyau flexible de transfert de fluide selon l'une des revendications 13 à 15, dans lequel ledit moyen d'alarme comprend une lumière (10) qui s'allume et une lumière (15) qui s'éteint par la mise hors tension du conducteur électrique (9, 14) ou l'augmentation de la valeur de résistance du conducteur électrique (9, 14).

19. Tuyau flexible de transfert de fluide selon l'une des revendications 13 à 15, dans lequel ledit moyen d'alarme comprend un émetteur pour émettre un signal d'onde sonore ou d'onde électromagnétique par la mise hors tension dudit conducteur électrique (9) ou l'augmentation de la valeur de résistance dudit conducteur électrique (9).

20. Tuyau flexible de transfert de fluide selon l'une des revendications 1 à 19, dans lequel une alimentation électrique (12) du circuit connectant ledit conducteur électrique (9) et ledit moyen d'alarme (10) est une batterie solaire.

21. Tuyau flexible de transfert de fluide selon l'une des revendications 3, 4, 5, 13, 14 ou 15, dans lequel ladite couche de caoutchouc de surface externe (7) présente des rayures sur une surface circonférentielle externe de celui-ci.
